# EUROPEAN PATENT SPECIFICATION

(11) **EP 4 026 762 B1**
(45) Date of publication and mention of the grant of the patent: **21.02.2024**
(21) Application number: 19944099.1
(22) Date of filing: 04.09.2019
(51) Int. Cl.: B62K 19/38, B62J 45/423, B62J 45/413, G01P 3/488, B60T 8/32, G01P 1/02

(54) **WHEEL SPEED SENSOR MOUNTING STRUCTURE**
MONTAGESTRUKTUR FÜR RADDREHZAHLSENSOR
STRUCTURE DE MONTAGE DE CAPTEUR DE VITESSE DE ROUE

(43) Date of publication of application: 13.07.2022
(73) Proprietor: HONDA MOTOR CO., LTD., Minato-ku Tokyo 107-8556 (JP)
(72) Inventor: HAYASHI Tsunemori, Tokyo 107-8556 (JP); KANEKO Naohiro, Tokyo 107-8556 (JP)
(74) Representative: Kiwit, Benedikt
(86) International application number: PCT/JP2019/034735
(87) International publication number: WO 2021/044542

(56) References cited:
- EP-A1- 3 330 166
- WO-A1-2016/157439
- WO-A1-2019/064902
- JP-A- 2001 165 949
- JP-A- 2007 078 549
- JP-A- 2008 049 752
- JP-A- 2014 136 542

## Description

### TECHNICAL FIELD

The present invention relates to a wheel speed sensor mounting structure.

### BACKGROUND ART

In current straddle-type vehicles, a wheel speed sensor may be provided in a wheel to employ an anti-lock brake system (ABS) or a traction control system (TCS).

For example, JP 4 856 495 B2 discloses a configuration in which a wheel speed sensor is mounted on a swing arm supporting a rear wheel from an outer side in a vehicle width direction, and the wheel speed sensor and a sensor cable are covered with a separate cover member from an outer side in the vehicle width direction.

WO 2019/064902 A1, which discloses the preamble of claim 1, shows a wheel speed sensor support with a simple structure in a front part structure of a saddle-riding type vehicle. The front structure of the straddle-type vehicle includes a pair of left and right front forks that support the front wheels, a pulsar rotor provided on the front wheels, and a wheel speed sensor that detects the rotation of the pulsar rotor. The fork has a bottom case that supports the axle of the front wheel at its lower end, and the bottom case has a brake caliper support that supports the brake caliper that brakes the front wheel behind the axle, A wheel speed sensor attachment portion to which a wheel speed sensor is attached is provided on the surface of the bottom case on the pulsar rotor side between the axle and the brake caliper as viewed from the side of the vehicle. A sensor cover that covers the wheel speed sensor is attached to the bottom case by two sensor cover fixing bolts.

### SUMMARY

### PROBLEMS TO BE SOLVED BY THE INVENTION

However, in the above-described conventional configuration, the cover member attached to an outer surface of a swing arm was exposed to an outer side in a vehicle width direction, and an appearance was poor.

On the other hand, in order to improve the appearance, it is conceivable to mount a wheel speed sensor on a swing arm from an inner side in the vehicle width direction. In this case, since the wheel speed sensor is not visible from an outer side in the vehicle width direction when the wheel speed sensor is mounted, the following problems arise. That is, a mounting position of the wheel speed sensor is difficult to be ascertained, and mounting positional accuracy for the wheel speed sensor varies.

Therefore, the present invention provides a wheel speed sensor mounting structure in which an influence on an external appearance due to provision of a wheel speed sensor can be minimized, and positional accuracy for the wheel speed sensor can be secured.

### MEANS FOR SOLVING THE PROBLEM

As a means for solving the above-described problem, a first aspect of the present invention is a wheel speed sensor mounting structure including a wheel support member (38) supported by a vehicle body (F) and configured to support a wheel (WR), and a wheel speed sensor (51) detecting a rotation speed of the wheel (WR), in which the wheel speed sensor (51) is disposed on an inner side of the wheel support member (38) in a vehicle width direction, and at least a part thereof is disposed in a region (N) surrounded by an axle (AR) of the wheel (WR) and chassis component attachment parts (38c1 and 38c2) of the wheel support member (38) in a side view.

According to this configuration, since the wheel speed sensor is mounted on an inner side of the wheel support member in the vehicle width direction, the wheel speed sensor is unlikely to be visually noticeable, and an influence on an external appearance can be minimized. Also, when the wheel speed sensor is mounted, since the rear wheel axle and the chassis component attachment parts make it easy to find the sensor mounting part, the following effects are achieved. That is, mounting workability of the wheel speed sensor can be improved, and positional accuracy for the wheel speed sensor can be secured.

A first positioning part (61) (in the following also simply referred to as "positioning part") is provided on the inner side of the wheel support member (38) in the vehicle width direction, adjacent to a sensor fastening part (63) which fastens the wheel speed sensor (51), and used for positioning of the wheel speed sensor (51).

According to this configuration, when the wheel speed sensor is disposed in the sensor fastening part, positioning of the wheel speed sensor is easily and accurately performed. Therefore, positional accuracy for the wheel speed sensor can be secured, and fastening work of the wheel speed sensor can be easily performed.

A second positioning part (62) is provided on the inner side of the wheel support member (38) in the vehicle width direction, separated from the sensor fastening part (63) and the positioning part (61), and used for positioning of the wheel speed sensor (51) in a rotational direction with respect to a center of the fastening part.

Even with this configuration, when the wheel speed sensor is disposed in the sensor fastening part, positioning of the wheel speed sensor is easily and accurately performed. Therefore, positional accuracy for the wheel speed sensor can be secured, and fastening work of the wheel speed sensor can be easily performed.

The second positioning part (62) includes a surrounding part (62a) formed to follow an engaged part (51d) at a portion engaging with the engaged part (51d) of the wheel speed sensor (51).

According to this configuration, a load on the engaged part when the protruding part performs positioning of the wheel speed sensor in a rotational direction can be suppressed.

The wheel speed sensor (51) is covered with a protective member (52) and fastened to the wheel support member (38) together with the protective member (52).

According to this configuration, the wheel speed sensor can be better protected, and the protective member can be jointly fastened and fixed with the wheel speed sensor to improve mounting workability.

The wheel speed sensor (51) is mounted on the wheel support member (38) in a state in which it is sandwiched between a holding part (52d) provided in the protective member (52) and the positioning part (61) provided on the inner side of the wheel support member (38) in the vehicle width direction.

According to this configuration, since the wheel speed sensor is mounted on the wheel support member in a state of being sandwiched from two directions, positional accuracy for the wheel speed sensor can be improved.

### ADVANTAGE OF THE INVENTION

According to the present invention, it is possible to provide a wheel speed sensor mounting structure in which an influence on an external appearance due to provision of a wheel speed sensor can be minimized, and positional accuracy for the wheel speed sensor can be secured.

### BRIEF DESCRIPTION OF THE DRAWINGS

Fig. 1 is a right side view of a motorcycle according to an embodiment of the present invention.
Fig. 2 is a right side view around a rear wheel of the motorcycle.
Fig. 3 is a rear view around the rear wheel of the motorcycle.
Fig. 4 is a right side view in which a main part of Fig. 2 is enlarged.
Fig. 5 is a left side view of the main part of FIG. 2 from an inner side in a vehicle width direction and is a cross-sectional view along line V-V of Fig. 3.
Fig. 6 is a perspective view around a sensor mounting part of an auxiliary arm.
Fig. 7 is a perspective view around the sensor mounting part of the auxiliary arm alone.
Fig. 8 is a perspective view of a sensor sub-assembly of a wheel speed sensor.
Fig. 9 is a perspective view of a protective cover for the wheel speed sensor.
Fig. 10 is a cross-sectional view along line X-X of Fig. 4.
Fig. 11 is a cross-sectional view along line XI-XI of Fig. 4.

### DESCRIPTION OF THE EMBODIMENTS

Hereinafter, an embodiment of the present invention will be described with reference to the drawings. In the following description, directions such as forward, rearward, left, and right are the same as directions in a vehicle to be described below unless otherwise specified. Also, an arrow FR indicating a forward direction with respect to the vehicle, an arrow LH indicating a leftward direction with respect to the vehicle, an arrow UP indicating an upward direction with respect to the vehicle, and a line CL indicating a vehicle body left-right center are illustrated at suitable positions in the drawings used for the following description.

### <Overall vehicle>

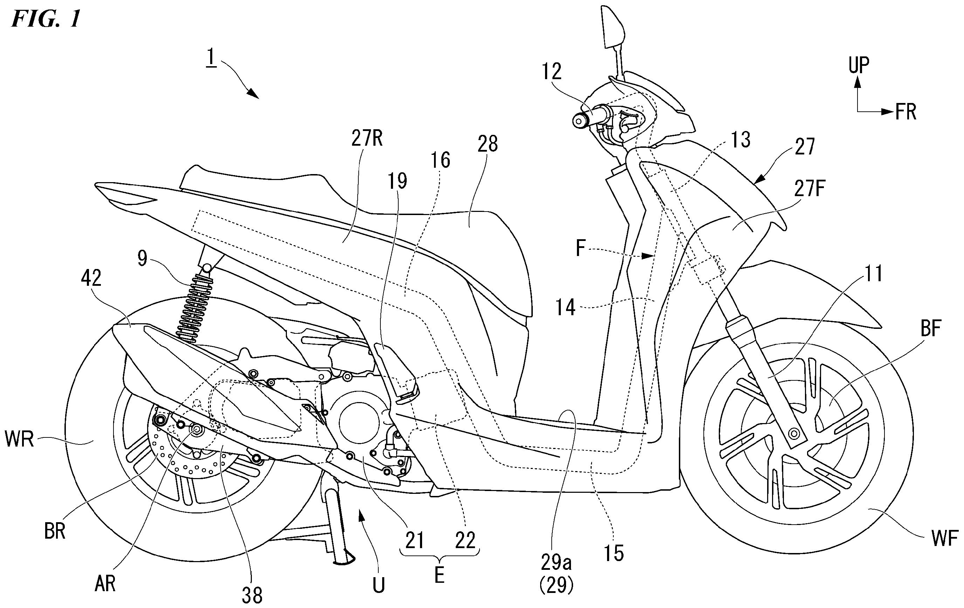

As illustrated in Fig. 1, a motorcycle (straddle-type vehicle) 1 of the present embodiment includes a head pipe 13 at a front end portion of a vehicle body frame F. A front fork 11 that rotatably supports a front wheel WF and a steering handlebar 12 are supported by the head pipe 13 to be steerable. At a lower portion of the vehicle body frame F, a lower side of a front portion of a swing-type power unit (hereinafter referred to as a power unit U) is supported to be vertically swingable. The motorcycle 1 is a straddle-type vehicle of a unit swing type including the power unit U in which an engine (internal combustion engine) E serving as a prime mover and a rear wheel WR serving as a drive wheel swing integrally with respect to the vehicle body frame F (vehicle main body).

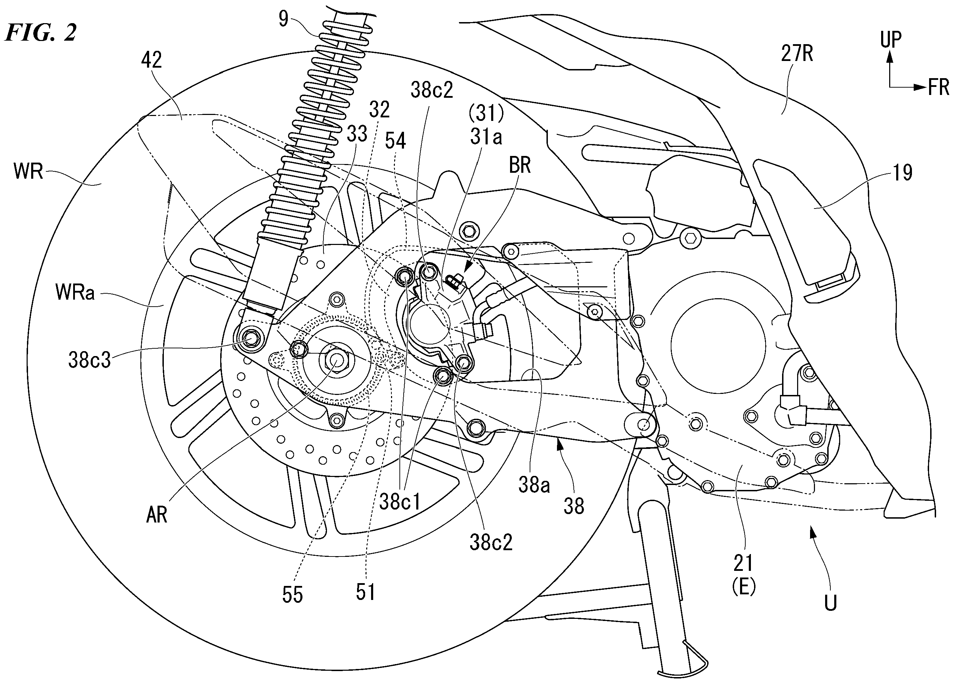

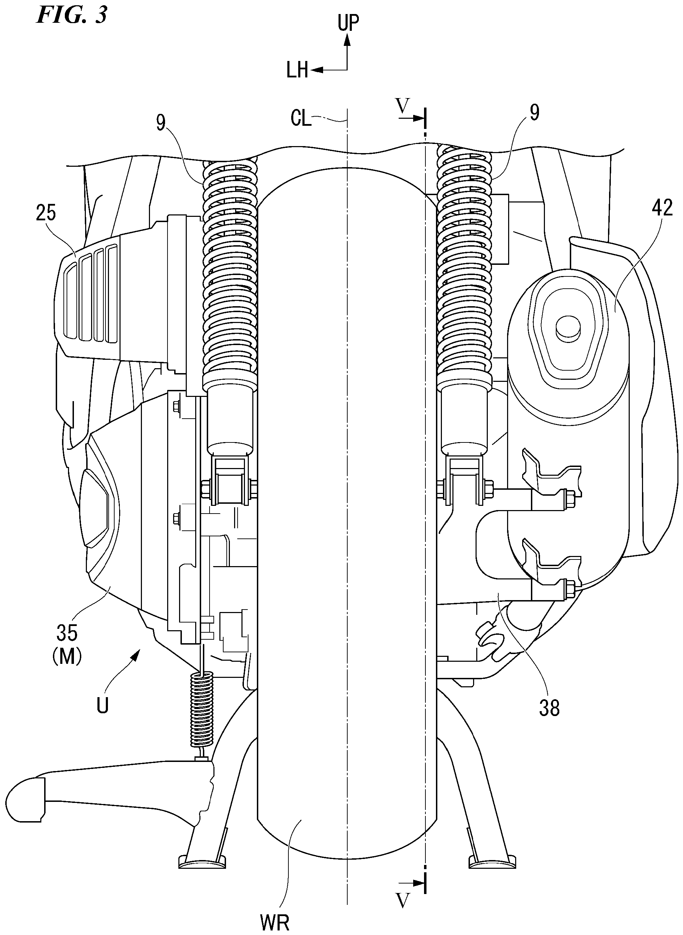

Referring also to Figs. 2 and 3, the power unit U is an integrated unit in which the engine E serving as a prime mover of the motorcycle 1 is disposed at a portion in front, and a transmission M for shifting an output from the engine E is disposed on a left side of a rear portion. An axle (rear wheel axle) AR of the rear wheel WR serving as a drive wheel is supported at a rear portion of the transmission M. A front portion of the power unit U is supported by a support part of the vehicle body frame F to be vertically swingable via a suspension link or the like. A rear end portion of the power unit U is supported by a rear end portion of the vehicle body frame F via a pair of left and right rear cushions 9 which are shock absorbers. In the drawing, reference sign WRa indicates a wheel of the rear wheel WR, and reference sign WRc indicates a central axis of the rear wheel WR (axle AR).

As illustrated in Fig. 1, the vehicle body frame F includes a down frame 14 extending downward and rearward from the head pipe 13, a lower frame 15 extending rearward from a lower end portion of the down frame 14, and a rear frame 16 extending rearward and upward from a rear end portion of the lower frame 15. A vicinity of the vehicle body frame F is covered with a vehicle body cover 27. A seat 28 having front and rear seating surfaces for a rider to be seated is supported above a rear portion of the vehicle body cover 27.

The vehicle body cover 27 includes a step floor 29 on which a driver seated on the seat 28 places his/her feet, a front body 27F which is continuous with the front of the step floor 29, and a rear body 27R which is continuous with the rear of the step floor 29. A straddling space that allows the rider to easily straddle the vehicle body is formed above the step floor 29 and between the seat 28 and the steering wheel 12. Reference sign 19 in the drawing indicates a folding step for a passenger.

The step floor 29 has, for example, a flat shape over a left-right width of a low floor part of the vehicle body and forms a substantially horizontal upper surface (floor surface 29a) of the low floor part. The motorcycle 1 is a scooter-type vehicle having the step floor 29 on which the driver places his/her feet. Further, it may be configured to include a center tunnel extending in a front-rear direction at a left-right center of the step floor 29.

The engine E is a four-stroke single cylinder engine in which a rotation center axis of a crankshaft (not illustrated) extends in a left-right direction (vehicle width direction) and includes a cylinder part 22 that protrudes from a front end portion of a crankcase 21 toward the front substantially horizontally (slightly inclined upward to the front, in detail).

Referring to Fig. 3, a transmission case 35 as a rear arm protruding to the left and then extending to the rear is connected to a left rear side of the crankcase 21. The transmission M is housed in the transmission case 35.

The transmission M is a belt-type continuously variable transmission housed in a length direction of the transmission case 35 in a side view. The rear wheel axle AR (which is also an output shaft) protrudes on a right side of a rear portion of the transmission case 35, and the rear wheel WR is attached to the rear wheel axle AR to be integrally rotatable.

A front end portion of an auxiliary arm 38 extending in a front-rear direction is connected to a right side of a rear portion of the crankcase 21. The auxiliary arm 38, together with the transmission case 35, constitutes a rear arm (swing arm) that supports the rear wheel WR. The auxiliary arm 38 supports a right end portion of the rear wheel axle AR at a rear end portion. The auxiliary arm 38, together with the transmission case 35, constitutes the swing arm that supports the rear wheel WR. Lower end portions of the pair of left and right rear cushions 9 are connected to the rear end portions of the transmission case 35 and the auxiliary arm 38. Upper end portions of the left and right rear cushions 9 are connected to rear end portions of the left and right rear frames 16.

A central opening 38a penetrating in the vehicle width direction is formed in the auxiliary arm 38. Hollowing out is performed on an inner side of the auxiliary arm 38 in the vehicle width direction leaving a reinforcing rib 38b. A caliper 31 of a rear wheel brake BR is attached to an inner side in the vehicle width direction of a rear portion of the auxiliary arm 38 via a caliper bracket 32. In the drawing, reference sign 38c1 indicates a caliper bracket attachment part (chassis component attachment part) for attaching the caliper bracket 32 in the auxiliary arm 38, reference sign 38c2 indicates a caliper attachment part (chassis component attachment part) for attaching the caliper 31 in the caliper bracket 32, and reference sign 38c3 indicates a cushion connection part (chassis component attachment part) for connecting a lower end portion of the rear cushion 9 in the auxiliary arm 38. For convenience of illustration, reference signs of the attachment parts 38c1, 38c2, and 38c3 are denoted at positions of fastening bolts.

A muffler (silencer) 42 connected to an exhaust pipe 41 of the engine E is disposed on a right side of the rear wheel WR. An air cleaner 25 supported by an upper portion of the transmission case 35 is disposed on a left side of the rear wheel WR.

### <ABS>

The motorcycle 1 employs an anti-lock brake system (hereinafter referred to as "ABS") that feeds back a slip ratio of a wheel to control a braking force on the wheel. The ABS of the motorcycle 1 includes wheel speed sensors provided in the front and rear wheels WF and WR and controls brake hydraulic pressures of the front and rear wheels WF and WR by comparing outputs of the wheel speed sensors with each other.

The motorcycle 1 includes a front wheel brake BF and a rear wheel brake BR which are hydraulic disc brakes.

The rear wheel brake BR includes a brake disc 33 that rotates integrally with the rear wheel WR, and a caliper 31 that sandwiches and presses the brake disc 33 to generate a frictional braking force. The front wheel brake BF has the same configuration.

Each of the calipers of the front and rear brakes is connected to a master cylinder via an ABS modulator (not illustrated). A brake operator such as a brake lever is connected to the master cylinder. At the time of braking the vehicle, the driver operates the brake operator to generate a hydraulic pressure in the master cylinder, and the hydraulic pressure is supplied to the front and rear calipers via the ABS modulator. Thereby, the front and rear calipers sandwich and press the brake discs to brake rotation of the front and rear wheels WF and WR.

The ABS modulator can detect that the front and rear wheels WF and WR are about to fall into a lock state from detection information of wheel speed sensors 51 at the time of braking the vehicle. When the ABS modulator detects a likelihood of locking of the front and rear wheels WF and WR, it performs ABS control (anti-lock brake control) for the front and rear brakes. The ABS control is performed by reducing or increasing a brake hydraulic pressure supplied to the caliper, or keeping it constant.

### <Vicinity of rear wheel>

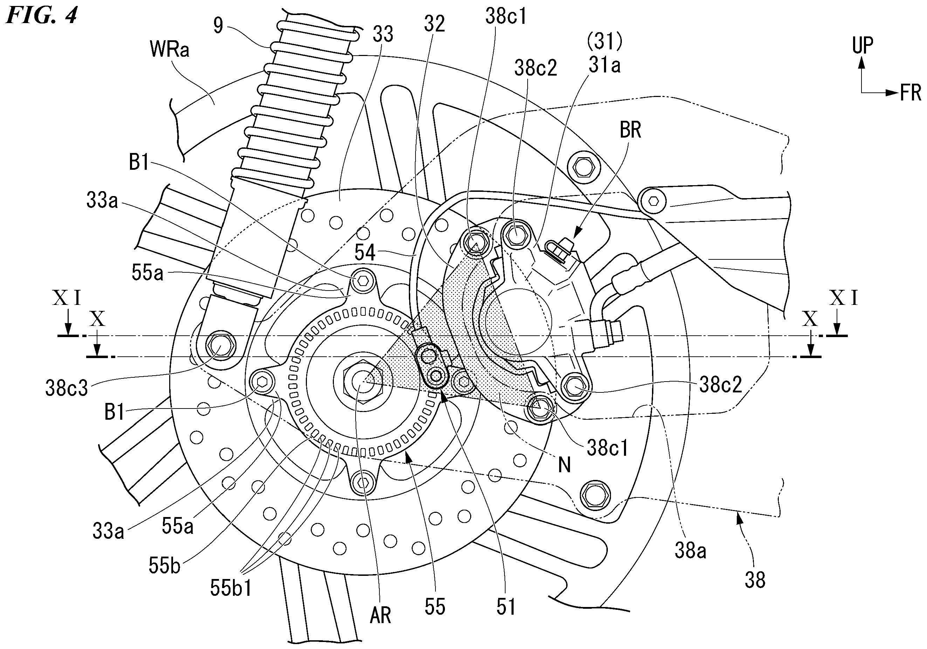

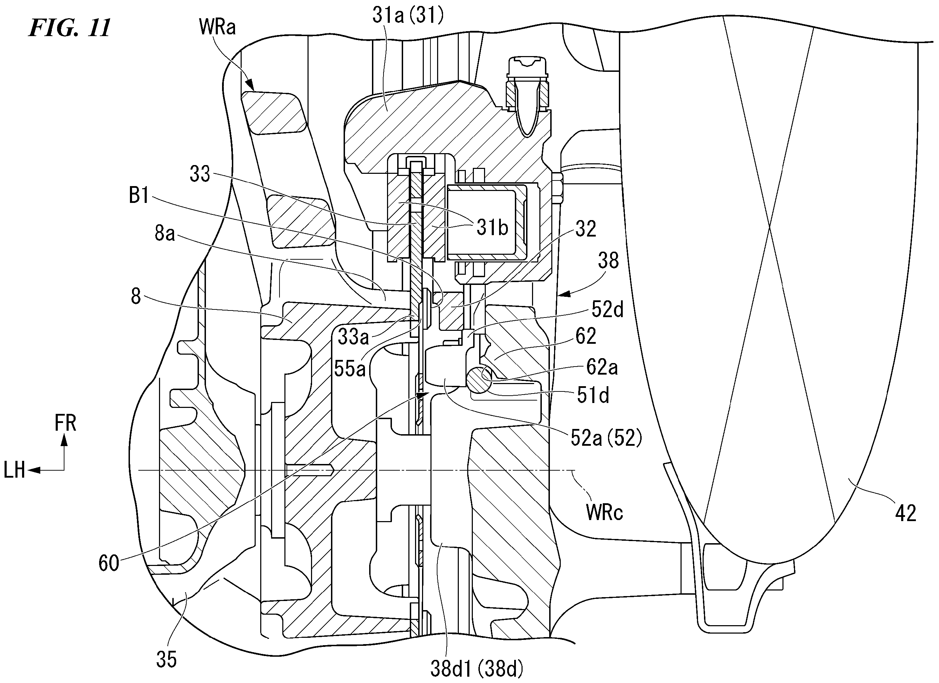

As illustrated in Figs. 4, 10 and 11, the rear wheel brake BR is disposed on a right portion of the rear wheel WR. The brake disc 33 of the rear wheel brake BR has an annular disc shape with an opening at a center portion. On an inner circumferential side of the brake disc 33, a plurality of fastening flanges 33a that allow the brake disc 33 to be fastened to a wheel hub 8 of the rear wheel WR are provided to protrude. The plurality of fastening flanges 33a are disposed to be aligned at regular intervals in a disc circumferential direction (circumferential direction of the rear wheel WR). A plurality of disc attachment parts 8a for attaching the fastening flanges 33a of the brake disc 33 are provided in the wheel hub 8. Each of the disc attachment parts 8a allows a fastening bolt B1 in the vehicle width direction to be detachably attached from an outer side in the vehicle width direction. A fastening flange 55a of a sensor ring 55 is jointly fastened and fixed to each disc attachment part 8a together with the fastening flange 33a of the brake disc 33.

Referring to Fig. 4, the caliper 31 of the rear wheel brake BR is supported by the auxiliary arm 38 via the caliper bracket 32. The caliper 31 is a floating type (one-side push type) that is slidably supported by a specified amount in an axle direction (a direction along the axle, a vehicle width direction) with respect to the caliper bracket 32 fixed to the auxiliary arm 38. A pair of upper and lower caliper bracket attachment parts 38c1 for fastening the caliper bracket 32 are provided on an inner side in the vehicle width direction of the rear portion of the auxiliary arm 38.

The caliper 31 includes a caliper body 31a in a mode of straddling the brake disc 33 in the axle direction, and a pair of brake pads 31b that are held on an inner side of the caliper body 31a for sandwiching and pressing the brake disc 33. A cylinder and a piston (reference signs are omitted for both) in the axle direction are provided on an outer side of the caliper body 31a in the axle direction. In the caliper body 31a, when a hydraulic pressure is supplied to an oil chamber in the cylinder and the piston moves inward in the axle direction, the brake pad 3 1b on an outer side in the axle direction presses an outer surface of the brake disc 33, and a reaction force thereby causes the caliper body 31a to slide outward in the axle direction so that the brake pad 31b on an inner side in the axle direction presses an inner surface of the brake disc 33. Thereby, both the brake pads 31b sandwich and press the brake disc 33 to brake the rear wheel WR. Further, the caliper 31 may be of an opposed piston type.

### <Wheel speed sensor>

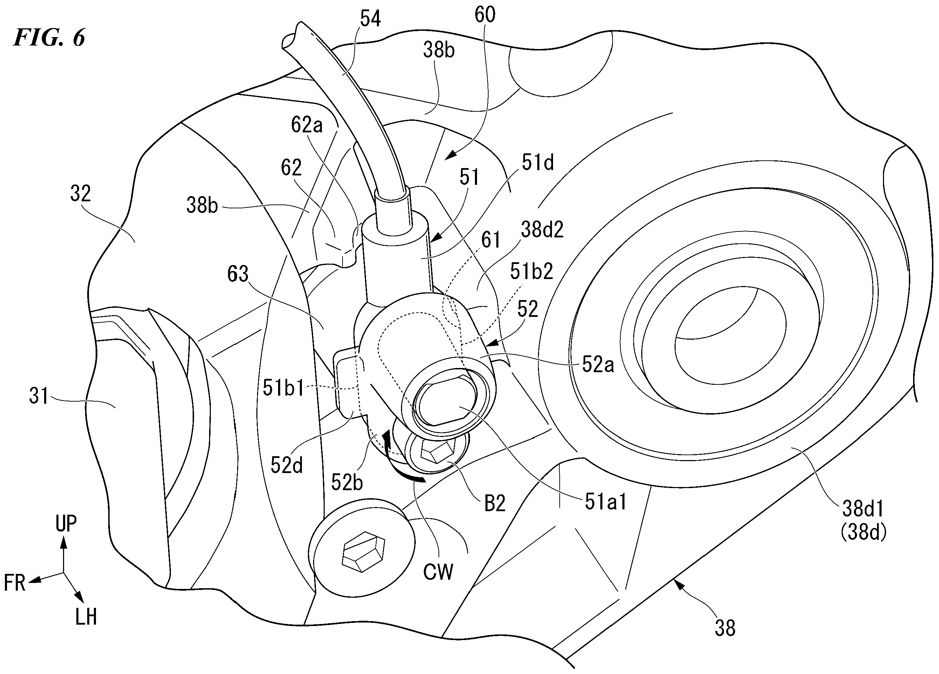

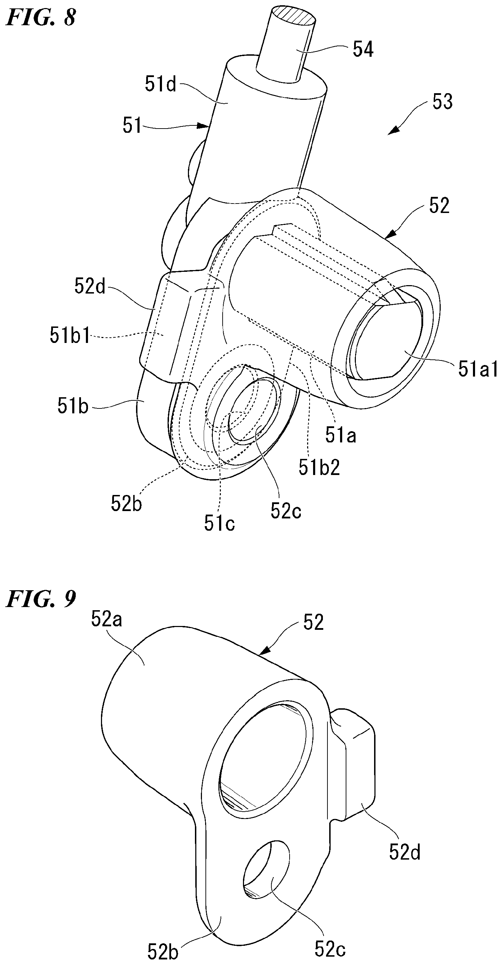

As illustrated in Figs. 4 to 6 and 8, the wheel speed sensor 51 for detecting a rotation speed of the rear wheel WR is mounted on the inner side of the auxiliary arm 38 in the vehicle width direction. The plate-shaped sensor ring (pulsar ring) 55 that rotates integrally with the rear wheel WR is attached to a right end portion of the wheel hub 8.

The wheel speed sensor 51 is directly mounted on the auxiliary arm 38 (wheel support member), but the present invention is not limited thereto. For example, the wheel speed sensor 51 may be indirectly mounted on the auxiliary arm 38 via a different member. For example, the wheel speed sensor 51 may be mounted on a member on a non-rotating side with respect to the rear wheel WR similarly to the auxiliary arm 38.

The wheel speed sensor 51 has a pickup coil that generates a pulse signal in accordance with rotation of the sensor ring 55. The pickup coil generates a pulse signal due to a change in magnetic flux according to rotation of a pickup hole 55b1 of the sensor ring 55. The wheel speed sensor 51 outputs the pulse signal generated by the pickup coil to the control unit. A sensor cable 54 is drawn out from the wheel speed sensor 51. The sensor cable 54 is connected to a specified control unit. For example, the wheel speed information detected by the wheel speed sensor 51 is used for controlling the ABS, a traction control system, or the like.

The wheel speed sensor 51 includes a columnar detection unit 51a and a holder part 51b integrally provided on one end side of the detection unit 51a in an axial direction. The holder part 51b has an oval shape when viewed in the axial direction of the detection unit 51a. The detection unit 51a is disposed on one side of the holder part 51b in a major axis direction, and a bolt insertion hole 51c is disposed on the other side of the holder part 51b in the major axis direction. The detection unit 51a accommodates the pickup coil in a case that forms an outer shape thereof. The case of the detection unit 51a and the holder part 51b are integrally formed of a resin or the like. The other end of the detection unit 5 1a in the axial direction is a detection end facing the sensor ring 55. A fastening bolt B2 for fastening and fixing the wheel speed sensor 51 to a sensor mounting part 60 of the auxiliary arm 38 is inserted into the bolt insertion hole 51c.

A one side edge 51b1 of the holder part 51b in a minor axis direction is a first engaged part with which a holding claw part 52d provided on a side edge of a base end portion of a protective cover 52 to be described later comes into contact.

The other side edge 51b2 of the holder part 51b in the minor axis direction is a second engaged part that comes into contact with an upright wall part (positioning part) 61 provided on an inner side of the auxiliary arm 38 in the vehicle width direction.

A cylindrical wiring lead-out part 51d extending in the major axis direction protrudes from one side end of the holder part 51b in the major axis direction. The wiring lead-out part 51d is integrally formed with the holder part 51b. The sensor cable 54 serving as a signal line is drawn out from a distal end of the wiring lead-out part 51d and is routed through the vehicle body side.

The wheel speed sensor 51 is mounted on the auxiliary arm 38 that is on a non-rotating side with respect to the rear wheel WR. The wheel speed sensor 51 is mounted on the inner side in the vehicle width direction of the rear portion of the auxiliary arm 38. Thereby, the wheel speed sensor 51 and the sensor ring 55 disposed on the inner side in the vehicle width direction of the rear portion of the auxiliary arm 38 are close to each other in the vehicle width direction, and installation of the wheel speed sensor 51 is facilitated.

### <Sensor ring>

As illustrated in Figs. 4, 10, and 11, the sensor ring 55 includes a detected part 55b having an annular shape that is coaxial with the rear wheel WR, and a plurality of fastening flanges 55a that extend to an outer circumferential side of the detected part 55b. The sensor ring 55 is formed in a flat plate shape including the detected part 55b and the fastening flanges 55a. The detected part 55b is provided to have a diameter smaller than that of the wheel hub 8 when viewed in the axle direction. A plurality of pickup holes 55b 1 are formed in the detected part 55b at regular intervals in a ring circumferential direction. The detection end of the wheel speed sensor 51 faces the detected part 55b from an outer side in the axle direction. The detected part 55b is disposed on an outer side in the axle direction with respect to the outer surface of the brake disc 33. The plurality of fastening flanges 55a are disposed to be aligned at regular intervals in the ring circumferential direction. The fastening flanges 55a respectively overlap the plurality of fastening flanges 33a of the brake disc 33 from an outer side in the vehicle width direction. Each of the fastening flanges 55a is jointly fastened and fixed to the wheel hub 8 together with each of the fastening flanges 33a of the brake disc 33.

### <Protective cover>

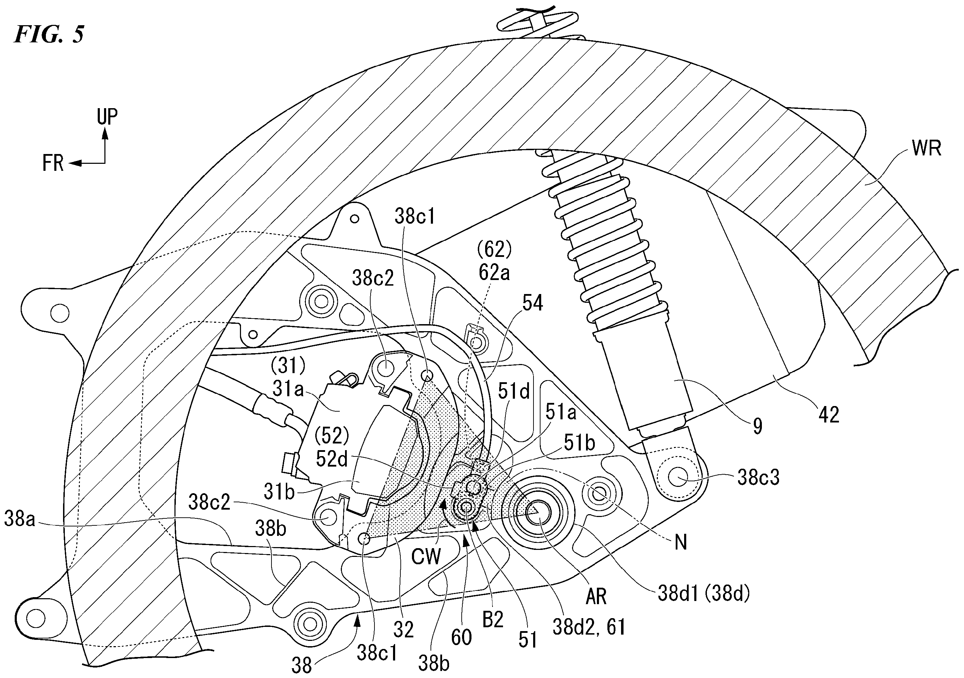

As illustrated in Figs. 5, 6, 8, and 9, the protective cover 52 is attached to the wheel speed sensor 51. The protective cover 52 includes a cylindrical cover part 52a that covers the detection unit 51a inserted therein, and an extension part 52b that extends in a radial direction from a base end side of the cover part 52a in the axial direction. A bolt insertion hole 52c through which the fastening bolt B2 is inserted is formed in the extension part 52b. Although the protective cover 52 is made of a metal, it may be integrally formed of a resin or the like (including an elastic material such as rubber). The protective cover 52 is in a state in which the extension part 52b overlaps the other side of the holder part 51b in the major axis direction with the detection unit 51a inserted in the cover part 52a. In this state, the fastening bolt B2 is inserted into the bolt insertion holes 51c and 52c of the extension part 52b and the holder part 51b. The fastening bolt B2 is screwed and fastened to a fastening boss 63 of the sensor mounting part 60 on an inner side of the auxiliary arm 38 in the vehicle width direction. Thereby, the wheel speed sensor 51 and the protective cover 52 are jointly fastened and fixed to the auxiliary arm 38. Hereinafter, a sub-assembly in which the protective cover 52 is attached to the wheel speed sensor 51 may be referred to as a sensor sub-assembly 53.

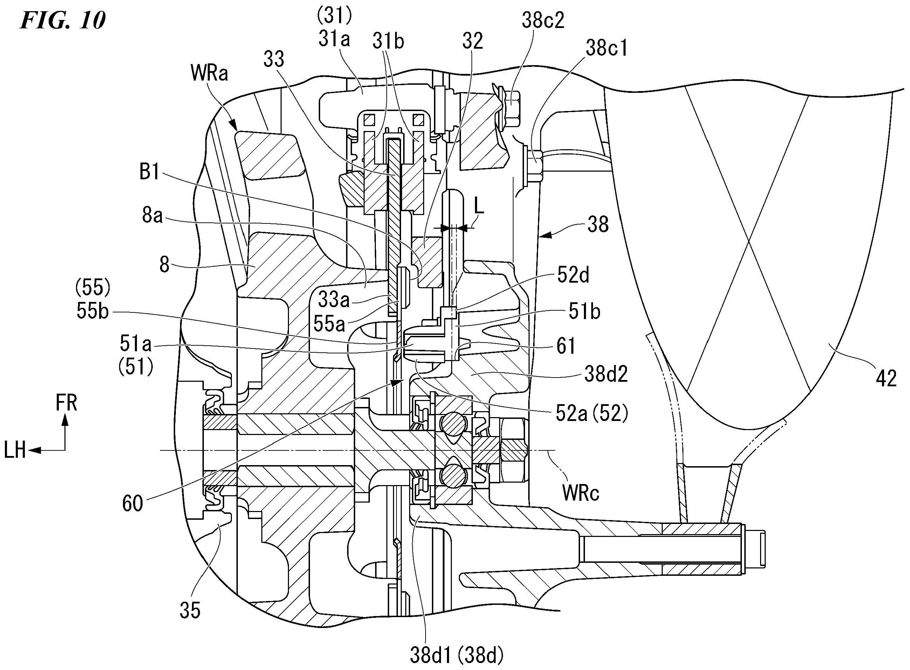

A holding claw part 52d that is in contact with the one side edge 51b1 of the holder part 51b in the minor axis direction is provided on one side edge of the base end portion of the protective cover 52 in a state in which it is assembled to the wheel speed sensor 51. The holding claw part 52d is provided across the cover part 52a and the extension part 52b of the protective cover 52. The holding claw part 52d has a rectangular parallelepiped shape that is long along the one side edge 51b1 of the holder part 51b. The holding claw part 52d produces the following actions when the sensor sub-assembly 53 is mounted on the auxiliary arm 38. When the protective cover 52 jointly rotates in a fastening direction (a clockwise direction, a direction of the arrow CW in the drawing) of the fastening bolt B2, the holding claw part 52d is brought into contact with and pressed against the one side edge 51b1 of the holder part 51b of the wheel speed sensor 51. The wheel speed sensor 51 stops rotation when the other side edge 51b2 of the holder part 51b is brought into contact with the upright wall part 61. Therefore, when the holding claw part 52d is pressed against the one side edge 51b1 of the holder part 51b, the holder part 51b is sandwiched between the holding claw part 52d and the upright wall part 61. The dimension L in Fig. 10 indicates a region in which the holding claw part 52d and the upright wall part 61 overlap in the vehicle width direction.

### <Sensor mounting part>

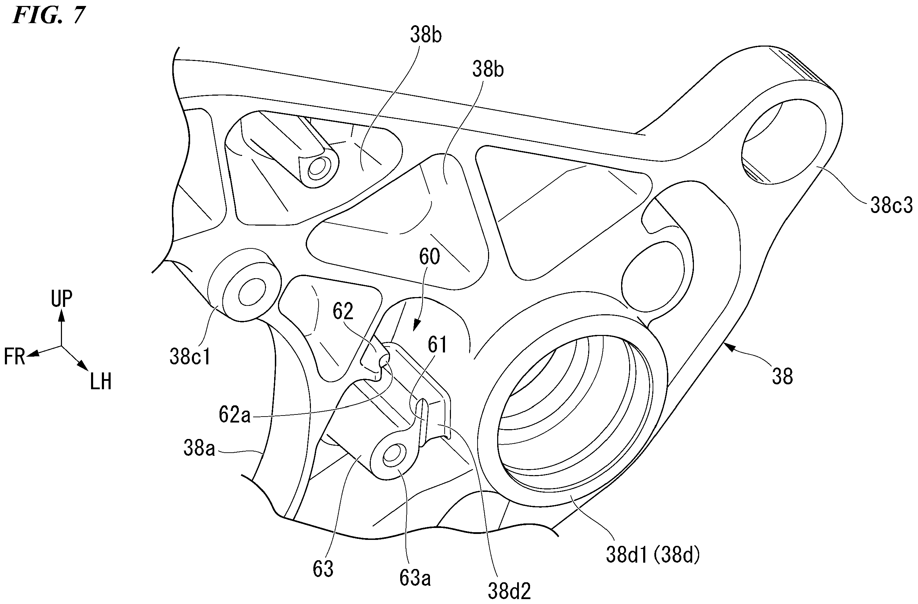

As illustrated in Figs. 5 to 7, the sensor mounting part 60 for mounting the sensor sub-assembly 53 is provided on the inner side in the vehicle width direction of the rear portion of the auxiliary arm 38. The sensor mounting part 60 is disposed in front of an axle insertion part 38d in which the rear wheel axle AR is inserted and supported in the auxiliary arm 38. The sensor mounting part 60 includes the fastening boss 63 for fastening the sensor sub-assembly 53, and also includes the upright wall part 61 and a protruding part 62 for positioning the sensor sub-assembly 53 (particularly the wheel speed sensor 51).

The axle insertion part 38d includes a cylindrical wall 38d1 for holding a bearing or the like. The fastening boss 63 is connected and supported on a front end side of the cylindrical wall 38d1 via a connection wall 38d2 extending outward in the radial direction. The fastening boss 63 is disposed to be shifted downward with respect to the connection wall 38d2. The upright wall part 61 that rises inward in the vehicle width direction along the vehicle width direction is provided at a distal end portion on an inner side of the connection wall 38d2 in the vehicle width direction. The upright wall part 61 rises vertically from a distal end surface (fastening seat surface) 63a on an inner side of the fastening boss 63 in the vehicle width direction. The upright wall part 61 is brought into contact with the other side edge 5 1b2 of the holder part 51b in the fastening direction CW of the fastening bolt B2. Thereby, rotation of the wheel speed sensor 51 stops in fastening the fastening bolt B2.

The protruding part 62 is integrally formed with the reinforcing rib 38b exposed to an inner side of the auxiliary arm 38 in the vehicle width direction above the upright wall part 61. A concave part 62a that is curved to follow an outer circumferential surface of the wiring lead-out part 51d of the wheel speed sensor 51 is formed at a distal end portion of the protruding part 62 on an inner side in the vehicle width direction. The concave part 62a surrounds a range extending from an outer side of the wiring lead-out part 51d in the vehicle width direction to the front thereof when the wheel speed sensor 51 is mounted on the auxiliary arm 38. The front of the wiring lead-out part 51d is a side in an opposite direction (a fastening release direction, a counterclockwise direction) to the fastening direction CW of the fastening bolt B2. Thereby, when the wheel speed sensor 51 is removed from the auxiliary arm 38, rotation of the wheel speed sensor 51 in the opposite direction is restricted by the protruding part 62.

Further, in the present embodiment, the sensor mounting part 60 and the sensor sub-assembly 53 are disposed on the inner side in the vehicle width direction of the rear portion of the auxiliary arm 38. Also, at least a part (entire in the embodiment) of the sensor mounting part 60 and the sensor sub-assembly 53 is disposed in a triangular region N surrounded by connecting an axis of the rear wheel axle AR and axes of the fastening bolts of the upper and lower caliper bracket attachment parts 38c1 of the auxiliary arm 38 in a side view. Thereby, the wheel speed sensor 51 is unlikely to be visually noticeable from the outside in the vehicle width direction, and an influence on an external appearance can be minimized. In the present embodiment, the caliper bracket attachment part 38c1 and the caliper attachment part 38c2 may be inclusively referred to as caliper attachment parts (chassis component attachment parts) 38c1 and 38c2.

Also, when the wheel speed sensor 51 is mounted from an outer side of the auxiliary arm 38 in the vehicle width direction, the rear wheel axle AR and the upper and lower caliper attachment parts 38c1 and 38c2 make it easy to find the sensor mounting part 60. That is, a position of the sensor mounting part 60 is easily found by tactual sense on the basis of the presence of the rear wheel axle AR and the upper and lower caliper attachment parts 38c1 and 38c2. Therefore, assembly of the sensor sub-assembly 53 can be easily performed.

Also, if a procedure for mounting the sensor sub-assembly 53 before attaching the caliper bracket 32 is employed, the sensor sub-assembly 53 can be more easily mounted. Also, since the caliper bracket 32 is disposed in front of the sensor sub-assembly 53 after the sensor sub-assembly 53 is mounted, the sensor sub-assembly 53 can be better protected.

Also, the positioning part (the upright wall part 61) is provided adjacent to the rear of a sensor fastening part (the fastening boss 63) for fastening the sensor sub-assembly 53 on the inner side in the vehicle width direction of the rear portion of the auxiliary arm 38. The upright wall part 61 performs positioning of the sensor sub-assembly 53 (particularly the wheel speed sensor 51) in a rotation direction (fastening direction) with respect to the fastening bolt B2. Thereby, when the sensor sub-assembly 53 is disposed in the sensor mounting part 60, the positioning of the sensor sub-assembly 53 is easily and accurately performed. Also, joint rotation of the sensor sub-assembly 53 is restricted even when the bolt is fastened. Therefore, the sensor sub-assembly 53 can be more easily mounted.

Further, a second positioning part (the protruding part 62) is provided apart from the fastening boss 63 and the upright wall part 61 on the inner side in the vehicle width direction of the rear portion of the auxiliary arm 38. The protruding part 62 performs positioning of the sensor sub-assembly 53 (particularly the wheel speed sensor 51) in a rotation direction (fastening release direction) with respect to the fastening bolt B2. This also makes it easy and accurate to position the sensor sub-assembly 53 when the sensor sub-assembly 53 is disposed in the sensor mounting part 60. Also, the joint rotation of the sensor sub-assembly 53 is restricted even when bolt fastening is released. Therefore, the sensor sub-assembly 53 can be mounted and removed more easily.

The protruding part 62 includes the concave part 62a that is curved to follow the outer circumference of the wiring lead-out part 51d of the wheel speed sensor 51 and engages with the wiring lead-out part 51d. Thereby, positioning of the sensor sub-assembly 53 is easily and accurately performed, and a load on the wiring lead-out part 51d can be suppressed even when the joint rotation of the sensor sub-assembly 53 is restricted.

The wheel speed sensor 51 is covered with a protective cover 52 made of a resin, and is fastened and fixed to the auxiliary arm 38 together with the protective cover 52. Thereby, the wheel speed sensor 51 can be better protected, and the protective cover 52 can be jointly fastened and fixed with the wheel speed sensor 51 to facilitate attachment and detachment.

When the wheel speed sensor 51 jointly rotates in the fastening direction CW of the fastening bolt B2 at the time of fastening the sensor sub-assembly 53, the one side edge 51b1 of the holder part 51b of the wheel speed sensor 51 comes into contact with the upright wall part 61. In this state, when the protective cover 52 further jointly rotates, the holding claw part 52d of the protective cover 52 is brought into contact with and presses the other side edge 51b2 of the holder part 51b. As a result, after the fastening bolt B2 is fastened, the holder part 51b of the wheel speed sensor 51 is sandwiched between the holding claw part 52d of the protective cover 52 and the upright wall part 61 of the auxiliary arm 38. In this state, since the wheel speed sensor 51 is mounted on the auxiliary arm 38 together with the protective cover 52, an accuracy of the mounting position of the wheel speed sensor 51 can be improved.

Further, the present invention is not limited to the above-described embodiment, and for example, the present invention has been applied to the mounting structure of the wheel speed sensor 51 of the rear wheel WR in the embodiment, but the present invention may be applied to a mounting structure of a wheel speed sensor of the front wheel WF. In this case, the wheel support member is a front wheel support member such as the front fork 11 instead of the rear wheel support member such as the auxiliary arm 38 (swing arm). The wheel support member is not limited to one that is supported by the vehicle body frame F but may be one supported by the engine, the transmission, or the like mounted on the vehicle body. Also, the caliper 31 may be configured to be directly attached to the wheel support member without interposing the caliper bracket 32 or the like. Also, a disposition of the caliper 31 is not limited to the front of the axle, and may be above, below, or behind the axle. The chassis component attachment part that defines a disposition region of the wheel speed sensor 51 is not limited to the caliper attachment parts 38c1 and 38c2, and may be an attachment part for a suspension component or a steering component.

The straddle-type vehicle described above includes general vehicles on which a driver straddles a vehicle body to ride, including not only motorcycles (including motorized bicycles and scooter type vehicles) but also three-wheeled vehicles (including vehicles with two front wheels and one rear wheel as well as vehicles with one front wheel and two rear wheels) or four-wheeled vehicles. Further, vehicles having an electric motor as a prime mover are also

### BRIEF DESCRIPTION OF THE REFERENCE SYMBOLS

1: Motorcycle (straddle-type vehicle)
38: Auxiliary arm (wheel support member)
38c1: Caliper bracket attachment part (chassis component attachment part)
38c2: Caliper attachment part (chassis component attachment part)
51: Wheel speed sensor
51d: Wiring lead-out part (engaged part)
52: Protective cover (protective member)
52d: Holding claw part (holding part)
55: Sensor ring
60: Sensor mounting part
61: Upright wall part (positioning part)
62: Protruding part (second positioning part)
62a: Concave part (surrounding part)
63: Fastening boss (sensor fastening part)
F: Vehicle body frame (vehicle body)
WR: Rear wheel (wheel)
AR: Axle
N: Region

## Claims

1. A wheel speed sensor mounting structure comprising:
a wheel support member (38) supported by a vehicle body (F) and configured to support a wheel (WR); and
a wheel speed sensor (51) detecting a rotation speed of the wheel (WR),
wherein the wheel speed sensor (51) is disposed on an inner side of the wheel support member (38) in a vehicle width direction and is disposed in a region (N) surrounded by an axle (AR) of the wheel (WR) and chassis component attachment parts (38c1 and 38c2) of the wheel support member (38) in a side view,
wherein the wheel speed sensor mounting structure further comprising:
a first positioning part (61) provided on the inner side of the wheel support member (38) in the vehicle width direction, adjacent to a sensor fastening part (63) which fastens the wheel speed sensor (51), and used for positioning of the wheel speed sensor (51); and
a second positioning part (62) provided on the inner side of the wheel support member (38) in the vehicle width direction, separated from the sensor fastening part (63) and the first positioning part (61), and used for positioning of the wheel speed sensor (51) in a rotational direction with respect to a center of the fastening part, wherein the wheel speed sensor (51) is covered with a protective member (52) and fastened to the wheel support member (38) together with the protective member (52), **characterized in that**
the second positioning part (62) includes a surrounding part (62a) formed to follow an engaged part (51d) at a portion engaging with the engaged part (51d) of the wheel speed sensor (51), and
wherein the wheel speed sensor (51) is mounted on the wheel support member (38) in a state in which it is sandwiched between a holding part (52d) provided in the protective member (52) and the first positioning part (61) provided on the inner side of the wheel support member (38) in the vehicle width direction.

## Patentansprüche

1. Montagestruktur für einen Raddrehzahlsensor, die aufweist:
ein Radhalteelement (38), das von einer Fahrzeugkarosserie (F) gehalten wird und ausgestaltet ist, ein Rad (WR) zu halten; und
einen Raddrehzahlsensor (51), der eine Drehzahl des Rades (WR) erfasst,
wobei der Raddrehzahlsensor (51) an einer Innenseite des Radhalteelements (38) in einer Fahrzeugbreitenrichtung angeordnet ist und in einem Gebiet (N) angeordnet ist, das von einer Achse (AR) des Rads (WR) und Befestigungsteilen der Chassiskomponente (38c1 und 38c2) des Radhaltelements (38) in einer Seitenansicht umgeben ist,
wobei die Montagestruktur für den Raddrehzahlsensor weiterhin aufweist:
ein erstes Positionierungsteil (61), das an der Innenseite des Radhalteelements (38) in der Fahrzeugbreitenrichtung benachbart zu einem Sensorbefestigungsteil (63), das den Raddrehzahlsensor (51) befestigt, vorgesehen ist und zur Positionierung des Raddrehzahlsensors (51) verwendet wird; und
ein zweites Positionierungsteil (62), das an der Innenseite des Radhalteelements (38) in der Fahrzeugbreitenrichtung getrennt vom Sensorbefestigungsteil (63) und dem ersten Positionierungsteil (61) vorgesehen ist und zur Positionierung des Raddrehzahlsensors (51) in einer Rotationsrichtung bezüglich einer Mitte des Befestigungsteils verwendet wird, wobei der Raddrehzahlsensor (51) mit einem Schutzelement (52) abgedeckt ist und am Radhalteelement (38) zusammen mit dem Schutzelement (52) befestigt ist, **dadurch gekennzeichnet, dass**
das zweite Befestigungsteil (62) ein umgebendes Teil (62a) aufweist, das ausgebildet ist, um einem eingegriffenen Teil (51d) an einem Bereich, der in das eingegriffene Teil (51d) des Raddrehzahlsensors (51) eingreift, zu folgen,
wobei der Raddrehzahlsensor (51) am Radhalteelement (38) in einem Zustand angebracht ist, in dem er zwischen einem Halteteil (52d), das im Schutzelement (52) vorgesehen ist, und dem ersten Positionierungsteil (61), das an der Innenseite des Radhalteelements (38) in der Fahrzeugbreitenrichtung vorgesehen ist, angeordnet ist.

## Revendications

1. Structure de montage de capteur de vitesse de roue comprenant :
un élément de support de roue (38) supporté par une carrosserie de véhicule (F) et configuré pour supporter une roue (WR) ; et
un capteur de vitesse de roue (51) détectant une vitesse de rotation de la roue (WR),
dans laquelle le capteur de vitesse de roue (51) est disposé sur un côté intérieur de l'élément de support de roue (38) dans un sens de largeur de véhicule et est disposé dans une région (N) entourée par un axe (AR) de la roue (WR) et des parties d'assujettissement de composants de châssis (38c1 et 38c2) de l'élément de support de roue (38) en vue latérale,
dans laquelle la structure de montage de capteur de vitesse de roue comprenant en outre :
une première partie de positionnement (61) fournie sur le côté intérieur de l'élément de support de roue (38) dans le sens de largeur de véhicule, adjacente à une partie de fixation de capteur (63) qui fixe le capteur de vitesse de roue (51), et utilisée pour le positionnement du capteur de vitesse de roue (51) ; et
une deuxième partie de positionnement (62) fournie sur le côté intérieur de l'élément de support de roue (38) dans le sens de largeur de véhicule, séparée de la partie de fixation de capteur (63) et de la première partie de positionnement (61), et utilisée pour le positionnement du capteur de vitesse de roue (51) dans un sens de rotation par rapport à un centre de la partie de fixation, dans laquelle le capteur de vitesse de roue (51) est recouvert d'un élément protecteur (52) et fixé à l'élément de support de roue (38) conjointement avec l'élément protecteur (52), **caractérisée en ce que**
la deuxième partie de positionnement (62) comporte une partie enveloppante (62a) formée pour suivre une partie en prise (51d) au niveau d'une partie venant en prise avec la partie en prise (51d) du capteur de vitesse de roue (51),
et
dans laquelle le capteur de vitesse de roue (51) est monté sur l'élément de support de roue (38) dans un état dans lequel il est pris en sandwich entre une partie de maintien (52d) fournie dans l'élément protecteur (52) et la première partie de positionnement (61) fournie sur le côté intérieur de l'élément de support de roue (38) dans le sens de largeur de véhicule.
